# EUROPÄISCHE PATENTANMELDUNG

(11) **EP 2 801 714 A1**
(43) Veröffentlichungstag der Anmeldung: **12.11.2014**
(21) Anmeldenummer: 14163398.2
(22) Anmeldetag: 03.04.2014
(51) Int. Cl.: F02D 17/02, F02D 41/00, F02M 25/07, F01N 13/10

(54) **Brennkraftmaschine mit abschaltbarem Zylinder und Verfahren zum Betreiben einer derartigen Brennkraftmaschine**

(30) Priorität: 08.05.2013 DE 102013208510; 08.05.2013 DE 102013208512
(71) Anmelder: Ford Global Technologies, LLC, Dearborn, MI 48126 (US)
(72) Erfinder: Linsel, Jan, 50767 Köln (DE); Hohenboeken, Kay, 50733 Koeln (DE); Stoffels, Harald, 50733 Koeln (DE)
(74) Vertreter: Illing, Rolf

(57) **Zusammenfassung**

Die Erfindung betrifft eine Brennkraftmaschine (13) mit mindestens zwei Zylindern (1, 2, 3, 4), bei der
- jeder Zylinder (1, 2, 3, 4) mindestens eine Auslassöffnung aufweist, an die sich eine Abgasleitung (7a, 7b) zum Abführen der Abgase via Abgasabführsystem (8) anschließt,
- jeder Zylinder (1, 2, 3, 4) mindestens eine Einlassöffnung aufweist, an die sich eine Ansaugleitung (5a, 5b) zum Zuführen von Ladeluft via Ansaugsystem (6) anschließt, und
- mindestens zwei Zylinder (1, 2, 3, 4) in der Art konfiguriert sind, dass diese mindestens zwei Gruppen mit jeweils mindestens einem Zylinder (1, 2, 3, 4) bilden, wobei der mindestens eine Zylinder (1, 4) einer ersten Gruppe ein auch bei Teilabschaltung der Brennkraftmaschine (13) in Betrieb befindlicher Zylinder (1, 4) ist und der mindestens eine Zylinder (2, 3) einer zweiten Gruppe als lastabhängig schaltbarer Zylinder (2, 3) ausgebildet ist.,

wobei
- in der mindestens einen Abgasleitung (7b) des mindestens einen lastabhängig schaltbaren Zylinders (2, 3) mindestens ein erstes Absperrelement (9) vorgesehen ist, welches die mindestens eine Abgasleitung (7b) zum Abführen der Abgase via Abgasabführsystem (8) bei zugeschaltetem Zylinder (2, 3) freigibt und bei Teilabschaltung versperrt, und
- in der mindestens einen Ansaugleitung (5b) des mindestens einen lastabhängig schaltbaren Zylinders (2, 3) mindestens ein zweites Absperrelement (11) vorgesehen ist, welches die mindestens eine Ansaugleitung (5b) zum Zuführen von Ladeluft via Ansaugsystem (6) bei zugeschaltetem Zylinder (2, 3) freigibt und bei Teilabschaltung versperrt.

## Beschreibung

Die Erfindung betrifft eine Brennkraftmaschine mit mindestens zwei Zylindern, bei der
- jeder Zylinder mindestens eine Auslassöffnung aufweist, an die sich eine Abgasleitung zum Abführen der Abgase via Abgasabführsystem anschließt,
- jeder Zylinder mindestens eine Einlassöffnung aufweist, an die sich eine Ansaugleitung zum Zuführen von Ladeluft via Ansaugsystem anschließt, und
- mindestens zwei Zylinder in der Art konfiguriert sind, dass sie mindestens zwei Gruppen mit jeweils mindestens einem Zylinder bilden, wobei der mindestens eine Zylinder einer ersten Gruppe ein auch bei Teilabschaltung der Brennkraftmaschine in Betrieb befindlicher Zylinder ist und der mindestens eine Zylinder einer zweiten Gruppe als lastabhängig schaltbarer Zylinder ausgebildet ist.

Des Weiteren betrifft die Erfindung ein Verfahren zum Betreiben einer derartigen Brennkraftmaschine.

Eine Brennkraftmaschine der genannten Art wird als Kraftfahrzeugantrieb eingesetzt. Im Rahmen der vorliegenden Erfindung umfasst der Begriff Brennkraftmaschine Dieselmotoren und Ottomotoren, aber auch Hybrid-Brennkraftmaschinen, die ein Hybrid-Brennverfahren nutzen, und Hybrid-Antriebe, die neben der Brennkraftmaschine eine mit der Brennkraftmaschine antriebsverbindbare Elektromaschine umfassen, welche Leistung von der Brennkraftmaschine aufnimmt oder als zuschaltbarer Hilfsantrieb zusätzlich Leistung abgibt.

Bei der Entwicklung von Brennkraftmaschinen ist es ein grundsätzliches Ziel, den Kraftstoffverbrauch zu minimieren, wobei ein verbesserter Gesamtwirkungsgrad im Vordergrund der Bemühungen steht.

Problematisch sind der Kraftstoffverbrauch und damit der Wirkungsgrad insbesondere bei Ottomotoren, d. h. bei fremdgezündeten Brennkraftmaschinen. Der Grund hierfür liegt im prinzipiellen Arbeitsverfahren des Ottomotors. Die Laststeuerung erfolgt in der Regel mittels einer im Ansaugsystem vorgesehenen Drosselklappe. Durch Verstellen der Drosselklappe kann der Druck der angesaugten Luft hinter der Drosselklappe mehr oder weniger stark reduziert werden. Je weiter die Drosselklappe geschlossen ist, d. h. je mehr diese das Ansaugsystem versperrt, desto höher ist der Druckverlust der angesaugten Luft über die Drosselklappe hinweg und desto geringer ist der Druck der angesaugten Luft stromabwärts der Drosselklappe und vor dem Einlass in die mindestens zwei Zylinder, d. h. Brennräume. Bei konstantem Brennraumvolumen kann auf diese Weise über den Druck der angesaugten Luft die Luftmasse, d. h. die Quantität eingestellt werden. Dies erklärt auch, weshalb sich die Quantitätsregelung gerade im Teillastbetrieb als nachteilig erweist, denn geringe Lasten erfordern eine hohe Drosselung und Druckabsenkung im Ansaugsystem, wodurch die Ladungswechselverluste mit abnehmender Last und zunehmender Drosselung steigen.

Um die beschriebenen Verluste zu senken, wurden verschiedene Strategien zur Entdrosselung einer fremdgezündeten Brennkraftmachine entwickelt.

Ein Lösungsansatz zur Entdrosselung des Ottomotors ist beispielsweise ein ottomotorisches Arbeitsverfahren mit Direkteinspritzung. Die direkte Einspritzung des Kraftstoffes ist ein geeignetes Mittel zur Realisierung einer geschichteten Brennraumladung. Die Direkteinspritzung des Kraftstoffes in den Brennraum ermöglicht damit in gewissen Grenzen eine Qualitätsregelung beim Ottomotor. Die Gemischbildung erfolgt durch die direkte Einspritzung des Kraftstoffes in die Zylinder bzw. in die in den Zylindern befindliche Luft und nicht durch äußere Gemischbildung, bei der der Kraftstoff im Ansaugsystem in die angesaugte Luft eingebracht wird.

Eine andere Möglichkeit, den Verbrennungsprozess eines Ottomotors zu optimieren, besteht in der Verwendung eines zumindest teilweise variablen Ventiltriebs. Im Gegensatz zu konventionellen Ventiltrieben, bei denen sowohl der Hub der Ventile als auch die Steuerzeiten nicht veränderlich sind, können diese den Verbrennungsprozess und damit den Kraftstoffverbrauch beeinflussenden Parameter mittels variabler Ventiltriebe mehr oder weniger stark variiert werden. Eine drosselfreie und damit verlustfreie Laststeuerung ist bereits möglich, wenn die Schließzeit des Einlassventils und der Einlassventilhub variiert werden können. Die während des Ansaugvorganges in den Brennraum einströmende Gemischmasse bzw. Ladeluftmasse wird dann nicht mittels Drosselklappe, sondern über den Einlassventilhub und die Öffnungsdauer des Einlassventils gesteuert. Variable Ventiltriebe sind aber sehr kostenintensiv und daher für den Serieneisatz häufig ungeeignet.

Ein weiterer Lösungsansatz zur Entdrosselung eines Ottomotors bietet die Zylinderabschaltung, d. h. die Abschaltung einzelner Zylinder in bestimmten Lastbereichen. Der Wirkungsgrad des Ottomotors im Teillastbetrieb kann durch eine solche Teilabschaltung verbessert, d. h. erhöht werden, denn die Abschaltung eines Zylinders einer Mehrzylinder-Brennkraftmaschine erhöht bei konstanter Motorleistung die Belastung der übrigen noch in Betrieb befindlichen Zylinder, so dass die Drosselklappe zum Einbringen einer größeren Luftmasse in diese Zylinder weiter geöffnet werden kann bzw. muss, wodurch insgesamt eine Entdrosselung der Brennkraftmaschine erreicht wird. Die ständig in Betrieb befindlichen Zylinder arbeiten während der Teilabschaltung im Bereich höherer Lasten, bei denen der spezifische Kraftstoffverbrauch niedriger ist. Das Lastkollektiv wird zu höheren Lasten hin verschoben.

Die während der Teilabschaltung weiter betriebenen Zylinder weisen zudem aufgrund der größeren zugeführten Luftmasse bzw. Gemischmasse eine verbesserte Gemischbildung auf.

Weitere Wirkungsgradvorteile ergeben sich dadurch, dass ein abgeschalteter Zylinder infolge der fehlenden Verbrennung keine Wandwärmeverluste infolge eines Wärmeüberganges von den Verbrennungsgasen an die Brennraumwände generiert.

Obwohl Dieselmotoren, d. h. selbstzündende Brennkraftmaschinen, aufgrund der angewandten Qualitätsregelung einen höheren Wirkungsgrad, d. h. einen niedrigeren Kraftstoffverbrauch, aufweisen als Ottomotoren, bei denen die Last - wie vorstehend beschrieben - mittels Drosselung bzw. Quantitätsregelung über die Füllung der Zylinder eingestellt wird, besteht auch bei Dieselmotoren Verbesserungspotential und Verbesserungsbedarf hinsichtlich des Kraftstoffverbauchs bzw. Wirkungsgrades.

Ein Konzept zur Reduzierung des Kraftstoffverbrauchs ist auch bei Dieselmotoren die Zylinderabschaltung, d. h. die Abschaltung einzelner Zylinder in bestimmten Lastbereichen. Der Wirkungsgrad des Dieselmotors im Teillastbetreib kann durch eine Teilabschaltung verbessert, d. h. erhöht werden, denn die Abschaltung mindestens eines Zylinders einer Mehrzylinder-Brennkraftmaschine erhöht bei konstanter Motorleistung auch beim Dieselmotor die Belastung der übrigen noch in Betrieb befindlichen Zylinder, so dass diese Zylinder in Bereichen höherer Lasten arbeiten, bei denen der spezifische Kraftstoffverbrauch niedriger ist. Das Lastkollektiv im Teillastbetrieb des Dieselmotors wird zu höheren Lasten hin verschoben.

Hinsichtlich der Wandwärmeverluste ergeben sich dieselben Vorteile wie beim Ottomotor, weshalb auf die entsprechenden Ausführungen Bezug genommen wird.

Die Teilabschaltung bei Dieselmotoren soll auch verhindern, dass das Kraftstoff-Luft-Gemisch im Rahmen der Qualitätsregelung bei abnehmender Last durch Verringerung der eingesetzten Kraftstoffmenge zu stark abmagert.

Die im Stand der Technik beschriebenen Mehrzylinder-Brennkraftmaschinen mit Teilabschaltung und die dazugehörigen Verfahren zum Betreiben dieser Brennkraftmaschinen weisen dennoch deutliches Verbesserungspotential auf, wie im Folgenden kurz und beispielhaft am Dieselmotor erläutert wird.

Wird bei einem direkteinspritzenden Dieselmotor zum Zwecke der Teilabschaltung die Kraftstoffzufuhr zu den abschaltbaren Zylindern unterbunden, d. h. eingestellt, nehmen die abgeschalteten Zylinder weiter am Ladungswechsel teil, falls der dazugehörige Ventiltrieb dieser Zylinder nicht deaktiviert wird bzw. nicht deaktiviert werden kann. Die dabei durch die abgeschalteten Zylinder generierten Ladungswechselverluste mindern die durch die Teilabschaltung erzielten Verbesserungen hinsichtlich des Kraftstoffverbauchs und Wirkungsgrades und stehen diesen entgegen, so dass der Nutzen der Teilabschaltung zumindest teilweise verloren geht, d. h. die Teilabschaltung in der Summe tatsächlich eine weniger deutliche Verbesserung mit sich bringt.

In der Praxis ist es nicht zielführend, den vorstehend beschriebenen nachteiligen Effekten dadurch abzuhelfen, dass schaltbare Ventiltriebe vorgesehen werden, da schaltbare Ventiltriebe wie variable Ventiltriebe sehr kostenintensiv sind und sich für den Serieneinsatz nicht eignen.

Vor dem Hintergrund des zuvor Gesagten ist es eine Aufgabe der vorliegenden Erfindung, eine Brennkraftmaschine gemäß dem Oberbegriff des Anspruchs 1 bereitzustellen, die hinsichtlich der Teilabschaltung verbessert ist.

Eine weitere Teilaufgabe der vorliegenden Erfindung besteht darin, ein Verfahren zum Betreiben einer derartigen Brennkraftmaschine aufzuzeigen.

Gelöst wird die erste Teilaufgabe durch eine Brennkraftmaschine mit mindestens zwei Zylindern, bei der
- jeder Zylinder mindestens eine Auslassöffnung aufweist, an die sich eine Abgasleitung zum Abführen der Abgase via Abgasabführsystem anschließt,
- jeder Zylinder mindestens eine Einlassöffnung aufweist, an die sich eine Ansaugleitung zum Zuführen von Ladeluft via Ansaugsystem anschließt, und
- mindestens zwei Zylinder in der Art konfiguriert sind, dass sie mindestens zwei Gruppen mit jeweils mindestens einem Zylinder bilden, wobei der mindestens eine Zylinder einer ersten Gruppe ein auch bei Teilabschaltung der Brennkraftmaschine in Betrieb befindlicher Zylinder ist und der mindestens eine Zylinder einer zweiten Gruppe als lastabhängig schaltbarer Zylinder ausgebildet ist, und
die dadurch gekennzeichnet ist, dass
- in der mindestens einen Abgasleitung des mindestens einen lastabhängig schaltbaren Zylinders mindestens ein erstes Absperrelement vorgesehen ist, welches die mindestens eine Abgasleitung zum Abführen der Abgase via Abgasabführsystem bei zugeschaltetem Zylinder freigibt und bei Teilabschaltung versperrt, und
- in der mindestens einen Ansaugleitung des mindestens einen lastabhängig schaltbaren Zylinders mindestens ein zweites Absperrelement vorgesehen ist, welches die mindestens eine Ansaugleitung zum Zuführen von Ladeluft via Ansaugsystem bei zugeschaltetem Zylinder freigibt und bei Teilabschaltung versperrt.

Bei der erfindungsgemäßen Brennkraftmaschine kann die Abfuhr des Abgases aus den abgeschalteten Zylindern via Abgasabführsystem bei Teilabschaltung unterbunden werden, ohne dass die schaltbaren Zylinder mit schaltbaren Ventiltrieben, die hohe Kosten verursachen, ausgestattet werden müssen. Hierzu wird in der mindestens einen Abgasleitung des mindestens einen lastabhängig schaltbaren Zylinders mindestens ein Absperrelement vorgesehen. Dieses erste Absperrelement gibt eine Abgasleitung zum Abführen von Abgas frei und versperrt diese bei Teilabschaltung, d. h. bei Abschaltung der schaltbaren Zylinder. Wie bereits im Zusammenhang mit dem Stand der Technik beschrieben, nehmen die abgeschalteten Zylinder weiter am Ladungswechsel teil, da der dazugehörige Ventiltrieb dieser Zylinder weiter betätigt wird, d. h. arbeitet, und nicht zusammen mit den Zylindern abgeschaltet wird. Die Abgasabführung wird aber wie vorstehend beschrieben unterbunden.

Das für die Auslassseite Gesagte gilt in analoger Weise auch für die Einlassseite. Bei der erfindungsgemäßen Brennkraftmaschine kann die Zufuhr von Ladeluft via Ansaugsystem zu den abgeschalteten Zylindern bei Teilabschaltung unterbunden werden, ohne dass die schaltbaren Zylinder mit schaltbaren Ventiltrieben, die hohe Kosten verursachen, ausgestattet werden müssen. Hierzu wird in der mindestens einen Ansaugleitung des mindestens einen lastabhängig schaltbaren Zylinders mindestens ein Absperrelement vorgesehen. Dieses zweite Absperrelement gibt eine Ansaugleitung zum Zuführen von Ladeluft frei und versperrt diese bei Teilabschaltung, d. h. bei Abschaltung der schaltbaren Zylinder.

Wie bereits im Zusammenhang mit dem Stand der Technik beschrieben, nehmen die abgeschalteten Zylinder weiter am Ladungswechsel teil, da der dazugehörige - nicht schaltbare - Ventiltrieb dieser Zylinder weiter betätigt wird, d. h. arbeitet, und nicht zusammen mit den Zylindern abgeschaltet wird. Die Ladeluftzufuhr wird aber wie vorstehend beschrieben unterbunden. Der fehlende Ladeluftstrom durch den mindestens einen abgeschalteten Zylinder bedingt einen verminderten Wärmeübergang infolge Konvektion, so dass die abgeschalteten Zylinder während der Teilabschaltung nicht bzw. weniger stark auskühlen. Vorteile hat dies insbesondere hinsichtlich der Schadstoffemissionen, insbesondere hinsichtlich der Emissionen an unverbrannten Kohlenwasserstoffen, da die abgeschalteten Zylinder unmittelbar nach Beendigung der Teilabschaltung wieder ihre Betriebstemperatur erreichen bzw. aufweisen.

Für aufgeladene Brennkraftmaschinen mit Abgasturbolaufladung ergeben sich weitere Vorteile. Im Gegensatz zu den im Stand der Technik beschriebenen Konzepten, bei denen den abgeschalteten Zylindern während der Teilabschaltung Ladeluft zugeführt wird, wird erfindungsgemäß eine höhere Abgastemperatur bzw. ein höherer Abgasdruck in dem im Abgasabführsystem befindlichen Abgas generiert. Beides resultiert in einer höheren Abgasenthalpie, welche maßgeblich vom Abgasdruck und der Abgastemperatur bestimmt wird. Die höhere Abgasenthalpie, d. h. die größere Abgasenergie, die an der Turbine eines Abgasturboladers bereitsteht, führt zu einer Erhöhung des Ladedrucks und damit der Ladeluftmenge, wobei während der Teilabschaltung nur dem mindestens einen in Betrieb befindlichen Zylinder Ladeluft zuzuführen ist bzw. zugeführt wird. Letzteres erhöht den Druck der Zylinderfrischladung dieser Zylinder deutlich. Dies erweitert den Anwendungsbereich der Teilabschaltung, nämlich den Lastbereich, in dem die Teilabschaltung eingesetzt werden kann, und verbessert die Güte der Verbrennung und damit das Verbrauchs- und Emissionsverhalten der Brennkraftmaschine. Zudem erreichen im Abgasabführsystem angeordnete Abgasnachbehandlungssysteme aufgrund der heißeren Abgase schneller ihre Betriebstemperatur bzw. Anspringtemperatur.

Mit der erfindungsgemäßen Brennkraftmaschine wird eine Brennkraftmaschine gemäß dem Oberbegriff des Anspruchs 1 bereitgestellt, die hinsichtlich ihrer Teilabschaltung verbessert ist. Damit wird die erste der Erfindung zugrunde liegende Aufgabe gelöst.

Die erfindungsgemäße Brennkraftmaschine hat mindestens zwei Zylinder bzw. mindestens zwei Gruppen mit jeweils mindestens einem Zylinder. Insofern sind Brennkraftmaschinen mit drei Zylindern, die in drei Gruppen mit jeweils einem Zylinder konfiguriert sind, oder Brennkraftmaschinen mit sechs Zylindern, die in drei Gruppen mit jeweils zwei Zylindern konfiguriert sind, ebenfalls erfindungsgemäße Brennkraftmaschinen. Die drei Zylindergruppen können im Rahmen einer Teilabschaltung sukzessive zugeschaltet bzw. abgeschaltet werden, wodurch auch ein zweimaliges Schalten realisiert werden kann. Die Teilabschaltung wird dadurch weiter optimiert. Die Zylindergruppen können auch eine unterschiedliche Anzahl an Zylindern umfassen.

Die erfindungsgemäße Ausgestaltung der Brennkraftmaschine verbessert den Wirkungsgrad der Brennkraftmaschine im Teillastbetrieb, d. h. bei niedrigen Lasten, wobei eine niedrige Last *T_{low}* vorzugsweise eine Last ist, die weniger als 50%, vorzugsweise weniger als 30% der maximalen Last *T_{max,n}* bei der momentan vorliegenden Drehzahl *nₘₒₜ* beträgt.

Weitere vorteilhafte Ausführungsformen der Brennkraftmaschine werden in Zusammenhang mit den Unteransprüchen erörtert.

Vorteilhaft sind Ausführungsformen der Brennkraftmaschine, bei denen eine Rückführleitung, die von der mindestens einen Abgasleitung des mindestens einen lastabhängig schaltbaren Zylinders stromaufwärts des mindestens einen ersten Absperrelements abzweigt und in die mindestens eine Ansaugleitung des mindestens einen lastabhängig schaltbaren Zylinders stromabwärts des mindestens einen zweiten Absperrelements einmündet, nicht vorgesehen ist.

Diese Ausführungsform bzw. dieser Disclaimer grenzt die erfindungsgemäße Brennkraftmaschine deutlich von Konzepten ab, bei denen das Abgas eines abgeschalteten Zylinders nicht abgeführt, sondern auf die Einlassseite zurückgeführt wird. Einem abgeschalteten Zylinder wird dabei eigenes Abgas zur Verfügung gestellt, um die Ladungswechselverluste zu reduzieren. Die Rückführleitung dient als Kurzschlussleitung und bewirkt einen Druckausgleich zwischen der Einlassseite und der Auslassseite eines abgeschalteten Zylinders. Dies trägt zur Reduzierung der Ladungswechselverluste bei. Die abgeschalteten Zylinder pumpen das rückgeführte Abgas in der Art eines Kompressors von der Einlassseite auf die Auslassseite. Ein derartiges Konzept beschreibt beispielsweise die US 4,365,597.

Vorteilhaft sind Ausführungsformen der Brennkraftmaschine, bei denen das mindestens eine erste Absperrelement und/oder das mindestens eine zweite Absperrelement stufenlos verstellbar sind.

Die Ausgestaltung als stufenlos verstellbares Absperrelement gestattet neben dem Freigeben und Versperren der Leitung eine Dosierung der aus einem abgeschalteten Zylinder abgeführten Abgasmenge bzw. der in einen abgeschalteten Zylinder eingebrachten Ladeluftmenge. Die Bemessung kann insbesondere betriebspunktspezifisch erfolgen.

Vorteilhaft sind auch Ausführungsformen der Brennkraftmaschine, bei denen das mindestens eine erste Absperrelement und/oder das mindestens eine zweite Absperrelement zweistufig schaltbar ist.

Vorteilhaft sind Ausführungsformen der Brennkraftmaschine, bei denen das mindestens eine erste Absperrelement und/oder das mindestens eine zweite Absperrelement ein Ventil oder eine verschwenkbare Klappe bzw. eine Drosselklappe ist.

Vorteilhaft sind Ausführungsformen der Brennkraftmaschine, bei denen das mindestens eine erste Absperrelement und/oder das mindestens eine zweite Absperrelement ein Drehschieber oder eine verdrehbare Walze ist.

Das mindestens eine erste Absperrelement bzw. das mindestens eine zweite Absperrelement kann elektrisch, hydraulisch, pneumatisch, mechanisch oder magnetisch steuerbar sein, vorzugsweise mittels Motorsteuerung.

Bei Brennkraftmaschinen, bei denen mindestens zwei schaltbare Zylinder vorgesehen sind und/oder ein schaltbarer Zylinder mindestens zwei Einlassöffnungen aufweist, sind Ausführungsformen vorteilhaft, die dadurch gekennzeichnet sind, dass
- die Ansaugleitungen der Zylinder der zweiten Zylindergruppe unter Ausbildung eines Einlasskrümmers zu einer Gesamtansaugleitung zusammenführen, und
- der Einlasskrümmer der zweiten Gruppe mit mindestens einem zweiten Absperrelement ausgestattet ist, welches die Ansaugleitungen zum Zuführen von Ladeluft via Ansaugsystem bei zugeschaltetem Zylinder freigibt und bei Teilabschaltung versperrt.

Vorteilhaft sind in diesem Zusammenhang Ausführungsformen der Brennkraftmaschine, bei denen das mindestens eine zweite Absperrelement in der Gesamtansaugleitung des Einlasskrümmers angeordnet ist.

Grundsätzlich kann auch in jeder Ansaugleitung eines abschaltbaren Zylinders ein zweites Absperrelement vorgesehen werden, wodurch die Anzahl der erforderlichen Absperrelemente aber zunimmt, insbesondere wenn die Zylinder mehr als eine Einlassöffnung aufweisen und/oder die zweite Gruppe mehr als einen abschaltbaren Zylinder umfasst.

Bei Brennkraftmaschinen, bei denen mindestens zwei schaltbare Zylinder vorgesehen sind und/oder ein schaltbarer Zylinder mindestens zwei Auslassöffnungen aufweist, Vorteilhaft sind Ausführungsformen der Brennkraftmaschine, die dadurch gekennzeichnet sind, dass
- die Abgasleitungen der Zylinder der zweiten Zylindergruppe unter Ausbildung eines Auslasskrümmers zu einer Gesamtabgasleitung zusammenführen, und
- der Auslasskrümmer der zweiten Gruppe mit mindestens einem ersten Absperrelement ausgestattet ist, welches die Abgasleitungen zum Abführen der Abgase via Abgasabführsystem bei zugeschaltetem Zylinder freigibt und bei Teilabschaltung versperrt.

Vorteilhaft sind in diesem Zusammenhang Ausführungsformen der Brennkraftmaschine, bei denen das mindestens eine erste Absperrelement in der Gesamtabgasleitung des Auslasskrümmers angeordnet ist.

Grundsätzlich kann auch in jeder Abgasleitung eines abschaltbaren Zylinders ein erstes Absperrelement vorgesehen werden, wodurch die Anzahl der erforderlichen Absperrelemente aber zunimmt, insbesondere wenn die Zylinder mehr als eine Auslassöffnung aufweisen und/oder die zweite Gruppe mehr als einen abschaltbaren Zylinder umfasst.

Vorteilhaft sind Ausführungsformen der Brennkraftmaschine, bei denen mindestens ein Abgasturbolader vorgesehen ist, der eine im Abgasabführsystem angeordnete Turbine und einen im Ansaugsystem angeordneten Verdichter umfasst.

Der Vorteil des Abgasturboladers beispielsweise im Vergleich zu einem mechanischen Lader besteht darin, dass keine mechanische Verbindung zur Leistungsübertragung zwischen Lader und Brennkraftmaschine erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflusst, nutzt der Abgasturbolader die Abgasenergie der heißen Abgase.

Aufgeladene Brennkraftmaschinen werden vorzugsweise mit einer Ladeluftkühlung ausgestattet, mit der die komprimierte Ladeluft vor Eintritt in die Zylinder gekühlt wird. Dadurch erhöht sich die Dichte der zugeführten Ladeluft weiter. Die Kühlung trägt auf diese Weise ebenfalls zu einer Verdichtung und besseren Füllung der Brennräume, d. h. zu einem verbesserten Füllungsgrad, bei. Es kann vorteilhaft sein, den Ladeluftkühler mit einer Bypassleitung auszustatten, um den Ladeluftkühler im Bedarfsfall, beispielsweise nach einem Kaltstart, umgehen zu können.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen lässt sich so das Lastkollektiv zu höheren Lasten hin verschieben, bei denen der spezifische Kraftstoffverbrauch niedriger ist.

Schwierigkeiten bereitet die Auslegung der Abgasturboaufladung, wobei grundsätzlich eine spürbare Leistungssteigerung in allen Drehzahlbereichen angestrebt wird. Nach dem Stand der Technik wird häufig ein starker Drehmomentabfall bei Unterschreiten einer bestimmten Drehzahl beobachtet. Die Drehmomentcharakteristik einer aufgeladenen Brennkraftmaschine kann durch unterschiedliche Maßnahmen verbessert werden, beispielsweise dadurch, dass mehrere Lader - Abgasturbolader und/oder mechanische Lader - parallel und/oder in Reihe angeordnet im Abgasabführsystem vorgesehen werden.

Vorteilhaft sind Ausführungsformen der Brennkraftmaschine, bei denen mindestens ein Abgasnachbehandlungssystem im Abgasabführsystem vorgesehen ist; beispielsweise ein Oxidationskatalysator, ein Dreiwegekatalysator, ein Speicherkatalysator, ein selektiver Katalysator und/oder ein Partikelfilter.

Bei Brennkraftmaschinen mit vier in Reihe angeordneten Zylindern sind Ausführungsformen vorteilhaft, die dadurch gekennzeichnet sind, dass die zwei außenliegenden Zylinder und die zwei innenliegenden Zylinder jeweils eine Gruppe bilden.

Vorteilhaft sind Ausführungsformen der Brennkraftmaschine, bei denen mindestens eine Abgasrückführung vorgesehen ist, die eine Leitung umfasst, welche vom Abgasabführsystem abzweigt und in das Ansaugsystem einmündet.

Die Abgasrückführung, d. h. die Rückführung von Verbrennungsgasen, ist ein geeignetes Mittel die Stickoxidemissionen zu reduzieren, wobei mit zunehmender Abgasrückführrate die Stickoxidemissionen deutlich gesenkt werden können. Die Abgasrückführrate *x_{AGR}* bestimmt sich dabei zu *x_{AGR}* = *m_{AGR}* / *(m_{AGR}* + *m_{Frischluft})*, wobei *m_{AGR}* die Masse an zurückgeführtem Abgas und *m_{Frischluft}* die zugeführte und gegebenenfalls durch einen Verdichter geführte und komprimierte Frischluft bezeichnet. Um eine deutliche Senkung der Stickoxidemissionen zu erreichen, sind hohe Abgasrückführraten erforderlich, die in der Größenordnung von *x_{AGR}* ≈ *30%* bis *50%* liegen können.

Vorteilhaft sind dabei Ausführungsformen der Brennkraftmaschine, bei denen in der Leitung der Abgasrückführung ein Ventil zur Einstellung der rückgeführten Abgasmenge angeordnet ist.

Bei Brennkraftmaschinen mit mindestens einem Abgasturbolader und Abgasrückführung sind Ausführungsformen vorteilhaft, bei denen die Leitung der Abgasrückführung stromaufwärts der Turbine des mindestens einen Abgasturboladers vom Abgasabführsystem abzweigt und stromabwärts des Verdichters in das Ansaugsystem einmündet. Bei dieser sogenannten Hochdruck-AGR wird das Abgas stromaufwärts der Turbine aus dem Abgasabführsystem entnommen und stromabwärts des Verdichters in das Ansaugsystem eingespeist, weshalb das Abgas vor Rückführung keiner Abgasnachbehandlung unterzogen, insbesondere keinem Partikelfilter zugeführt werden muss, da eine Verschmutzung des Verdichters nicht zu befürchten ist.

Beim Betrieb einer Brennkraftmaschine mit Abgasturboaufladung und gleichzeitiger Verwendung einer Hochdruck-AGR kann sich aber ein Konflikt ergeben, denn das rückgeführte Abgas steht nicht mehr zum Antrieb der Turbine zur Verfügung. Bei einer Steigerung der Abgasrückführrate nimmt der in die Turbine eingeleitete Abgasstrom ab. Der verminderte Abgasmassenstrom durch die Turbine bedingt ein kleineres Turbinendruckverhältnis, wodurch das Ladedruckverhältnis ebenfalls abnimmt, was gleichbedeutend ist mit einem kleineren Ladeluftstrom.

Eine Lösung hierfür bietet die sogenannte Niederdruck-AGR. Im Gegensatz zur Hochdruck-AGR wird bei der Niederdruck-AGR Abgas in das Ansaugsystem eingeleitet, welches die Turbine bereits durchströmt hat. Hierzu verfügt die Niederdruck-AGR über eine Rückführleitung, die stromabwärts der Turbine aus dem Abgasabführsystem abzweigt und stromaufwärts des Verdichters in das Ansaugsystem mündet.

Das mittels Niederdruck-AGR auf die Einlassseite zurückgeführte Abgas wird stromaufwärts des Verdichters mit Frischluft gemischt. Die auf diese Weise erzeugte Mischung aus Frischluft und rückgeführtem Abgas bildet die Ladeluft, die dem Verdichter zugeführt und verdichtet wird.

Da im Rahmen der Niederdruck-AGR Abgas durch den Verdichter hindurchgeführt wird, muss dieses zuvor einer Abgasnachbehandlung, insbesondere im Partikelfilter, unterzogen werden. Ablagerungen im Verdichter, welche die Geometrie des Verdichters, insbesondere die Strömungsquerschnitte, verändern und auf diese Weise den Wirkungsgrad des Verdichters verschlechtern, sind zu vermeiden.

Vorteilhaft sind Ausführungsformen der Brennkraftmaschine, bei denen jeder Zylinder zum Einbringen von Kraftstoff mit einer Direkteinspritzung ausgestattet ist.

Vorteilhaft sind dabei Ausführungsformen, bei denen jeder Zylinder zum Zwecke der Direkteinspritzung mit einer Einspritzdüse ausgestattet ist.

Die Kraftstoffzufuhr lässt sich zum Zwecke der Teilabschaltung bei direkteinspritzenden Brennkraftmaschinen schneller und zuverlässiger deaktivieren als bei Brennkraftmaschinen mit Saugrohreinspritzung, bei denen Kraftstoffreste im Saugrohr zu ungewollten Verbrennungen im abgeschalteten Zylinder führen können.

Nichtsdestotrotz können Ausführungsformen der Brennkraftmaschine vorteilhaft sein, bei denen zum Zwecke einer Kraftstoffversorgung eine Saugrohreinspritzung vorgesehen ist.

Die zweite der Erfindung zugrunde liegende Teilaufgabe, nämlich ein Verfahren zum Betreiben einer Brennkraftmaschine einer zuvor beschriebenen Art aufzuzeigen, wird mit einem Verfahren gelöst, das dadurch gekennzeichnet ist, dass der mindestens eine schaltbare Zylinder der zweiten Gruppe in Abhängigkeit von der Last T der Brennkraftmaschine geschaltet wird, in der Art, dass dieser mindestens eine schaltbare Zylinder bei Unterschreiten einer vorgebbaren Last *T_{down}* abgeschaltet wird und bei Überschreiten einer vorgebbaren Last *Tᵤₚ* zugeschaltet wird, wobei zur Abschaltung
- die mindestens eine Abgasleitung des mindestens einen schaltbaren Zylinders unter Verwendung des mindestens einen ersten Absperrelements versperrt wird,
- die mindestens eine Ansaugleitung des mindestens einen lastabhängig schaltbaren Zylinders unter Verwendung des mindestens einen zweiten Absperrelements versperrt wird, und
- die Kraftstoffversorgung des mindestens einen schaltbaren Zylinders deaktiviert wird.

Das bereits für die erfindungsgemäße Brennkraftmaschine Gesagte gilt auch für das erfindungsgemäße Verfahren, weshalb an dieser Stelle im Allgemeinen Bezug genommen wird auf die vorstehend hinsichtlich der Brennkraftmaschine gemachten Ausführungen. Die verschiedenen Brennkraftmaschinen erfordern teils unterschiedliche Verfahrensvarianten.

Die für das Unterschreiten bzw. Überschreiten vorgegebenen Grenzlasten *T_{down}* und *Tᵤₚ* können gleich groß, aber auch verschieden groß sein. Bei in Betrieb befindlicher Brennkraftmaschine sind die Zylinder der ersten Zylindergruppe ständig in Betrieb befindliche Zylinder. Es erfolgt ein Schalten der zweiten Zylindergruppe, d. h. ein Zuschalten bzw. Abschalten dieser zweiten Gruppe.

Vorteilhaft sind Verfahrensvarianten, bei denen der mindestens eine Zylinder der zweiten Gruppe abgeschaltet wird, sobald die vorgegebene Last *T_{down}* unterschritten wird und die momentane Last für eine vorgebbare Zeitspanne *Δt₁* niedriger ist als diese vorgegebene Last *T_{down}.*

Die Einführung einer zusätzlichen Bedingung für das Abschalten der Zylinder der zweiten Gruppe, d. h. die Teilabschaltung, soll ein zu häufiges Zu- und Abschalten verhindern, insbesondere eine Teilabschaltung, wenn die Last nur kurzzeitig die vorgegebene Last *T_{down}* unterschreitet und dann wieder steigt bzw. um den vorgegebenen Wert für die Last *T_{down}* schwankt, ohne dass das Unterschreiten eine Teilabschaltung rechtfertigen bzw. erfordern würde.

Aus diesen Gründen sind ebenfalls Verfahrensvarianten vorteilhaft, bei denen der mindestens eine Zylinder der zweiten Gruppe zugeschaltet wird, sobald die vorgegebene Last *Tᵤₚ* überschritten wird und die momentane Last für eine vorgebbare Zeitspanne *Δt₂* höher ist als diese vorgegebene Last *Tᵤₚ.*

Vorteilhaft sind Verfahrensvarianten, bei denen zur Abschaltung des mindestens einen schaltbaren Zylinders
- das Abgas aus dem mindestens einen schaltbaren Zylinder abgeführt wird,
- anschließend die mindestens eine Abgasleitung des mindestens einen schaltbaren Zylinders unter Verwendung des mindestens einen ersten Absperrelements versperrt wird,
- anschließend dem mindestens einen schaltbaren Zylinder Ladeluft zugeführt wird, und
- anschließend die mindestens eine Ansaugleitung des mindestens einen lastabhängig schaltbaren Zylinders unter Verwendung des mindestens einen zweiten Absperrelements versperrt wird.

Vorliegend wird das Abgas aus jedem abzuschaltenden Zylinder abgeführt, bevor die jeweilige Abgasleitung unter Verwendung mindestens eines Absperrelements versperrt wird. Im anschließenden Ansaugtakt wird dann nochmals Ladeluft, d. h. Frischluft, zugeführt, bevor auch die jeweilige Ansaugleitung unter Verwendung mindestens eines Absperrelements versperrt wird, so dass bei den sich anschließenden Verdichtungstakten während der Teilabschaltung Luft komprimiert wird. Der Zylinderdruck baut sich dabei infolge des Blowby langsam ab.

Vorteilhaft sind auch Verfahrensvarianten, bei denen zur Abschaltung des mindestens einen schaltbaren Zylinders
- die mindestens eine Abgasleitung des mindestens einen schaltbaren Zylinders unter Verwendung des mindestens einen ersten Absperrelements versperrt wird, bevor das Abgas aus dem mindestens einen schaltbaren Zylinder abgeführt wird, und
- die mindestens eine Ansaugleitung des mindestens einen lastabhängig schaltbaren Zylinders unter Verwendung des mindestens einen zweiten Absperrelements versperrt wird, bevor die mindestens eine Einlassöffnung des mindestens einen schaltbaren Zylinders geöffnet wird.

Im Gegensatz zu der vorherigen Variante wird in den abgeschalteten Zylindern während der Teilabschaltung nicht Luft, sondern Abgas bei den sich anschließenden Verdichtungstakten komprimiert. Infolgedessen kommt es zu höheren Zylinderdrücken. Insbesondere ist der Druck am Ende der Verdichtung höher als der Druck am Ende der vorhergehenden Verbrennung. Die dadurch hervorgerufene höhere Temperatur sorgt für einen höheren Wärmeeintrag in den Zylinderkopf bzw. -block. Vorteilhaft ist, dass nach Beendigung der Teilabschaltung Abgas anstelle von Luft in das Abgasabführsystem ausgeschoben wird, wodurch sich die Regelung einer Abgasnachbehandlung spürbar vereinfacht. Für den Fall, dass Luft ausgeschoben wird, könnte eine Anfettung des Gemisches des folgenden Arbeitspiels zielführend sein.

Vorteilhaft sind Verfahrensvarianten, bei denen zur Beendigung der Teilabschaltung
- zunächst die mindestens eine Abgasleitung des mindestens einen schaltbaren Zylinders unter Verwendung des mindestens einen ersten Absperrelements freigegeben wird, und
- anschließend die mindestens eine Ansaugleitung des mindestens einen lastabhängig schaltbaren Zylinders unter Verwendung des mindestens einen zweiten Absperrelements freigegeben wird.

Vorteilhaft sind Verfahrensvarianten, bei denen der mindestens eine in Betrieb befindliche Zylinder mittels Selbstzündung gezündet wird.

Die vorstehende Verfahrensvariante bezieht sich auf Verfahren, bei denen die Verbrennung mittels Selbstzündung eingeleitet wird, und damit auch auf Arbeitsverfahren, wie sie üblicherweise bei Dieselmotoren eingesetzt werden.

Vorteilhaft sind auch Verfahrensvarianten, bei denen jeder Zylinder zur Einleitung einer Fremdzündung mit einer Zündvorrichtung ausgestattet wird, wobei die Zündvorrichtung des mindestens einen schaltbaren Zylinders bei Abschaltung vorzugsweise deaktiviert wird.

Die vorstehende Verfahrensvariante betrifft die Anwendung des Verfahrens bei einer fremdgezündeten Brennkraftmaschine, beispielsweise einem direkteinspritzenden Ottomotor, dessen Zylinder zur Einleitung einer Fremdzündung jeweils mit einer Zündvorrichtung ausgestattet sind.

Vorteilhaft sind Ausführungsformen des Verfahrens, bei denen die vorgebbare Last *T_{down}* und/oder *Tᵤₚ* von der Drehzahl *nₘₒₜ* der Brennkraftmaschine abhängig ist. Dann gibt es nicht nur eine konkrete Last, bei deren Unterschreiten oder Überschreiten unabhängig von der Drehzahl *nₘₒₜ* geschaltet wird. Vielmehr wird drehzahlabhängig vorgegangen und ein Bereich im Kennfeld definiert, in dem teilabgeschaltet wird.

Grundsätzlich können weitere Betriebsparameter der Brennkraftmaschine als Kriterium für eine Teilabschaltung herangezogen werden, beispielsweise die Motortemperatur und/oder die Kühlmitteltemperatur nach einem Kaltstart der Brennkraftmaschine.

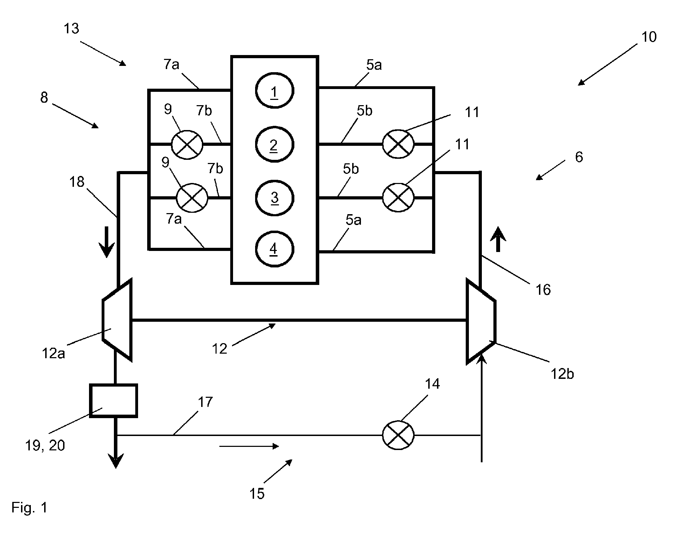

Im Folgenden wird die Erfindung anhand einer Ausführungsform einer selbstzündenden Brennkraftmaschine gemäß der Figur 1 näher erläutert. Hierbei zeigt:
- Fig. 1: schematisch eine erste Ausführungsform einer selbstzündenden Brennkraftmaschine.

Figur 1 zeigt schematisch eine erste Ausführungsform einer selbstzündenden Brennkraftmaschine 13.

Es handelt sich um einen Vier-Zylinder-Reihenmotor 13 mit Direkteinspritzung, bei dem die vier Zylinder 1, 2, 3, 4 entlang der Längsachse des Zylinderkopfes 10, d. h. in Reihe, angeordnet und jeweils mit einem Injektor zur Einspritzung von Kraftstoff ausgestattet sind, wobei die eingespritzte Kraftstoffmenge der Einstellung des Luftverhältnisses λ dient (nicht dargestellt).

Jeder Zylinder 1, 2, 3, 4 verfügt über eine Ansaugleitung 5a, 5b zum Zuführen von Ladeluft via Ansaugsystem 6 und eine Abgasleitung 7a, 7b zum Abführen der Abgase via Abgasabführsystem 8.

Die Brennkraftmaschine 13 ist zum Zwecke der Aufladung mit einem Abgasturbolader 12 ausgestattet, wobei in einer Gesamtabgasleitung 18 des Abgasabführsystems 8 die Turbine 12a und in einer Gesamtansaugleitung 16 des Ansaugsystems 6 der Verdichter 12b angeordnet ist. Die der Brennkraftmaschine 13 zugeführte Frischluft wird im Verdichter 12b komprimiert, wozu die Enthalpie des Abgasstroms in der Turbine 12a genutzt wird. Zur Nachbehandlung des Abgases ist in der Gesamtabgasleitung 18 stromabwärts der Turbine 12a ein als Abgasnachbehandlungssystem 19 dienender Partikelfilter 20 vorgesehen.

Die Brennkraftmaschine 13 ist des Weiteren mit einer Abgasrückführung 15 ausgestattet und zwar mit einer Niederdruck-AGR. Hierzu zweigt eine Rückführleitung 17 stromabwärts des Partikelfilters 20 aus dem Abgasabführsystem 8 ab und mündet stromaufwärts des Verdichters 12b in das Ansaugsystem 6 ein. In der Rückführleitung 17 der Abgasrückführung 15 ist ein Ventil 14 zur Einstellung der rückgeführten Abgasmenge angeordnet.

Die vier Zylinder 1, 2, 3, 4 sind konfiguriert und bilden zwei Gruppen mit jeweils zwei Zylindern 1, 2, 3, 4, wobei die beiden außenliegenden Zylinder 1, 4 eine erste Gruppe bilden, deren Zylinder 1, 4 auch bei Teilabschaltung der Brennkraftmaschine 13 in Betrieb sind, und die beiden innenliegenden Zylinder 2, 3 eine zweite Gruppe bilden, deren Zylinder als lastabhängig schaltbare Zylinder 2, 3 ausgebildet sind, die im Rahmen einer Teilabschaltung abgeschaltet werden.

In den Ansaugleitungen 5b der beiden innenliegenden Zylinder 2, 3 sind als zweite Absperrelemente 11 dienende Ventile vorgesehen, mit denen die Ansaugleitungen 5b zum Zuführen von Ladeluft via Ansaugsystem 6 bei zugeschalteten Zylindern 2, 3 freigegeben und bei Teilabschaltung versperrt werden.

In den Abgasleitungen 7b der beiden innenliegenden Zylinder 2, 3 sind als erste Absperrelemente 9 dienende Ventile vorgesehen, mit denen die Abgasleitungen 7b zum Abführen der Abgase via Abgasabführsystem 8 bei zugeschalteten Zylindern 2, 3 freigegeben und bei Teilabschaltung versperrt werden.

Die Zylinder 2, 3 der zweiten Gruppe sind vorliegend als zuschaltbare Zylinder 2, 3 ausgebildet, die im Teillastbetrieb der Brennkraftmaschine 13 bei Unterschreiten einer vorgebbaren Last abgeschaltet werden, wobei die Absperrelemente 9, 11 geschlossen werden. Dadurch erhöht sich die Lastanforderung an die weiter in Betrieb befindlichen Zylinder 1, 4 der ersten Gruppe, die dann bei höheren Lasten mit geringerem spezifischem Kraftstoffverbrauch betrieben werden. Eine Verbesserung des Wirkungsgrades ist die Folge.

### Bezugszeichen

- 1: erster Zylinder, außenliegender Zylinder
- 2: zweiter Zylinder, innenliegender Zylinder, schaltbarer Zylinder
- 3: dritter Zylinder, innenliegender Zylinder, schaltbarer Zylinder
- 4: vierter Zylinder, außenliegender Zylinder
- 5a: Ansaugleitung eines Zylinders der ersten Gruppe
- 5b: Ansaugleitung eines Zylinders der zweiten Gruppe, d. h. eines schaltbaren Zylinders
- 6: Ansaugsystem
- 7a: Abgasleitung eines Zylinders der ersten Gruppe
- 7b: Abgasleitung eines Zylinders der zweiten Gruppe, d. h. eines schaltbaren Zylinders
- 8: Abgasabführsystem
- 9: erstes Absperrelement
- 10: Zylinderkopf
- 11: zweites Absperrelement,
- 12: Abgasturbolader
- 12a: Turbine
- 12b: Verdichter
- 13: Brennkraftmaschine, Vier-Zylinder-Reihenmotor
- 14: AGR-Ventil
- 15: Abgasrückführung
- 16: Gesamtansaugleitung
- 17: Leitung
- 18: Gesamtabgasleitung
- 19: Abgasnachbehandlungssystem
- 20: Partikelfilter

- *nₘₒₜ*: Drehzahl der Brennkraftmaschine
- *T*: Last
- *T_{down}*: vorgebbare Last für das Unterschreiten einer Last
- *T_{low}*: Last im unteren Teillastbereich
- *T_{max,n}*: maximale Last bei einer vorliegenden Drehzahl *n*
- *Tᵤₚ*: vorgebbare Last für das Überschreiten einer Last
- *Δt₁*: vorgebbare Zeitspanne
- *Δt₂*: vorgebbare Zeitspanne

## Patentansprüche

1. Brennkraftmaschine (13) mit mindestens zwei Zylindern (1, 2, 3, 4), bei der
- jeder Zylinder (1, 2, 3, 4) mindestens eine Auslassöffnung aufweist, an die sich eine Abgasleitung (7a,7b) zum Abführen der Abgase via Abgasabführsystem (8) anschließt,
- jeder Zylinder (1, 2, 3, 4) mindestens eine Einlassöffnung aufweist, an die sich eine Ansaugleitung (5a, 5b) zum Zuführen von Ladeluft via Ansaugsystem (6) anschließt, und
- mindestens zwei Zylinder (1, 2, 3, 4) in der Art konfiguriert sind, dass diese mindestens zwei Gruppen mit jeweils mindestens einem Zylinder (1, 2, 3, 4) bilden, wobei der mindestens eine Zylinder (1, 4) einer ersten Gruppe ein auch bei Teilabschaltung der Brennkraftmaschine (13) in Betrieb befindlicher Zylinder (1, 4) ist und der mindestens eine Zylinder (2, 3) einer zweiten Gruppe als lastabhängig schaltbarer Zylinder (2, 3) ausgebildet ist,
**dadurch gekennzeichnet, dass**
- in der mindestens einen Abgasleitung (7b) des mindestens einen lastabhängig schaltbaren Zylinders (2, 3) mindestens ein erstes Absperrelement (9) vorgesehen ist, welches die mindestens eine Abgasleitung (7b) zum Abführen der Abgase via Abgasabführsystem (8) bei zugeschaltetem Zylinder (2, 3) freigibt und bei Teilabschaltung versperrt, und
- in der mindestens einen Ansaugleitung (5b) des mindestens einen lastabhängig schaltbaren Zylinders (2, 3) mindestens ein zweites Absperrelement (11) vorgesehen ist, welches die mindestens eine Ansaugleitung (5b) zum Zuführen von Ladeluft via Ansaugsystem (6) bei zugeschaltetem Zylinder (2, 3) freigibt und bei Teilabschaltung versperrt.

2. Brennkraftmaschine (13) nach Anspruch 1, **dadurch gekennzeichnet, dass** eine Rückführleitung, die von der mindestens einen Abgasleitung (7b) des mindestens einen lastabhängig schaltbaren Zylinders (2, 3) stromaufwärts des mindestens einen ersten Absperrelements (9) abzweigt und in die mindestens eine Ansaugleitung (5b) des mindestens einen lastabhängig schaltbaren Zylinders (2, 3) stromabwärts des mindestens einen zweiten Absperrelements (11) einmündet, nicht vorgesehen ist.

3. Brennkraftmaschine (13) nach Anspruch 1 oder 2, **dadurch gekennzeichnet, dass** das mindestens eine erste Absperrelement (9) und/oder das mindestens eine zweite Absperrelement (11) stufenlos verstellbar ist.

4. Brennkraftmaschine (13) nach Anspruch 1 oder 2, **dadurch gekennzeichnet, dass** das mindestens eine erste Absperrelement (9) und/oder das mindestens eine zweite Absperrelement (11) zweistufig schaltbar ist.

5. Brennkraftmaschine (13) nach einem der vorherigen Ansprüche, bei der mindestens zwei schaltbare Zylinder (2, 3) vorgesehen sind und/oder ein schaltbarer Zylinder mindestens zwei Einlassöffnungen aufweist, **dadurch gekennzeichnet, dass**
- die Ansaugleitungen (5b) der Zylinder (2, 3) der zweiten Zylindergruppe unter Ausbildung eines Einlasskrümmers zu einer Gesamtansaugleitung zusammenführen, und
- der Einlasskrümmer der zweiten Gruppe mit mindestens einem zweiten Absperrelement (11) ausgestattet ist, welches die Ansaugleitungen (5b) zum Zuführen von Ladeluft via Ansaugsystem (6) bei zugeschaltetem Zylinder (2, 3) freigibt und bei Teilabschaltung versperrt.

6. Brennkraftmaschine nach Anspruch 5, **dadurch gekennzeichnet, dass** das mindestens eine zweite Absperrelement (11) in der Gesamtansaugleitung des Einlasskrümmers angeordnet ist.

7. Brennkraftmaschine (13) nach einem der vorherigen Ansprüche, bei der mindestens zwei schaltbare Zylinder (2, 3) vorgesehen sind und/oder ein schaltbarer Zylinder mindestens zwei Auslassöffnungen aufweist, **dadurch gekennzeichnet, dass**
- die Abgasleitungen (7b) der Zylinder (2, 3) der zweiten Zylindergruppe unter Ausbildung eines Auslasskrümmers zu einer Gesamtabgasleitung zusammenführen, und
- der Auslasskrümmer der zweiten Gruppe mit mindestens einem ersten Absperrelement (9) ausgestattet ist, welches die Abgasleitungen (7b) zum Abführen der Abgase via Abgasabführsystem (8) bei zugeschaltetem Zylinder (2, 3) freigibt und bei Teilabschaltung versperrt.

8. Brennkraftmaschine nach Anspruch 7, **dadurch gekennzeichnet, dass** das mindestens eine erste Absperrelement (9) in der Gesamtabgasleitung des Auslasskrümmers angeordnet ist.

9. Brennkraftmaschine (13) nach einem der vorherigen Ansprüche, **dadurch gekennzeichnet, dass** mindestens ein Abgasturbolader (12) vorgesehen ist, der eine im Abgasabführsystem (8) angeordnete Turbine (12a) und einen im Ansaugsystem (6) angeordneten Verdichter (12b) umfasst.

10. Brennkraftmaschine (13) nach einem der vorherigen Ansprüche, **dadurch gekennzeichnet, dass** mindestens eine Abgasrückführung (15) vorgesehen ist, die eine Leitung (17) umfasst, welche vom Abgasabführsystem (8) abzweigt und in das Ansaugsystem (6) einmündet.

11. Brennkraftmaschine (13) nach Anspruch 10, **dadurch gekennzeichnet, dass** in der Leitung (17) der Abgasrückführung (15) ein Ventil (14) zur Einstellung der rückgeführten Abgasmenge angeordnet ist.

12. Brennkraftmaschine (13) nach einem der vorherigen Ansprüche, **dadurch gekennzeichnet, dass** jeder Zylinder (1, 2, 3, 4) zum Einbringen von Kraftstoff mit einer Direkteinspritzung ausgestattet ist.

13. Verfahren zum Betreiben einer Brennkraftmaschine (13) nach einem der vorherigen Ansprüche, **dadurch gekennzeichnet, dass** der mindestens eine schaltbare Zylinder (2, 3) der zweiten Gruppe in Abhängigkeit von der Last T der Brennkraftmaschine (13) geschaltet wird, in der Art, dass dieser mindestens eine schaltbare Zylinder (2, 3) bei Unterschreiten einer vorgebbaren Last *T_{down}* abgeschaltet wird und bei Überschreiten einer vorgebbaren Last *Tᵤₚ* zugeschaltet wird, wobei zur Abschaltung
- die mindestens eine Abgasleitung (7b) des mindestens einen schaltbaren Zylinders (2, 3) unter Verwendung des mindestens einen ersten Absperrelements (9) versperrt wird,
- die mindestens eine Ansaugleitung (5b) des mindestens einen lastabhängig schaltbaren Zylinders (2, 3) unter Verwendung des mindestens einen zweiten Absperrelements (11) versperrt wird, und
- die Kraftstoffversorgung des mindestens einen schaltbaren Zylinders (2, 3) deaktiviert wird.

14. Verfahren nach Anspruch 13, **dadurch gekennzeichnet, dass** zur Abschaltung des mindestens einen schaltbaren Zylinders (2, 3)
- das Abgas aus dem mindestens einen schaltbaren Zylinder (2, 3) abgeführt wird,
- anschließend die mindestens eine Abgasleitung (7b) des mindestens einen schaltbaren Zylinders (2, 3) unter Verwendung des mindestens einen ersten Absperrelements (9) versperrt wird,
- anschließend dem mindestens einen schaltbaren Zylinder (2, 3) Ladeluft zugeführt wird, und
- anschließend die mindestens eine Ansaugleitung (5b) des mindestens einen lastabhängig schaltbaren Zylinders (2, 3) unter Verwendung des mindestens einen zweiten Absperrelements (11) versperrt wird.

15. Verfahren nach Anspruch 13, **dadurch gekennzeichnet, dass** zur Abschaltung des mindestens einen schaltbaren Zylinders (2, 3)
- die mindestens eine Abgasleitung (7b) des mindestens einen schaltbaren Zylinders (2, 3) unter Verwendung des mindestens einen ersten Absperrelements (9) versperrt wird, bevor das Abgas aus dem mindestens einen schaltbaren Zylinder (2, 3) abgeführt wird, und
- die mindestens eine Ansaugleitung (5b) des mindestens einen lastabhängig schaltbaren Zylinders (2, 3) unter Verwendung des mindestens einen zweiten Absperrelements (11) versperrt wird, bevor die mindestens eine Einlassöffnung des mindestens einen schaltbaren Zylinders (2, 3) geöffnet wird.

16. Verfahren nach einem der Ansprüche 13 bis 15, **dadurch gekennzeichnet, dass** zur Beendigung der Teilabschaltung
- zunächst die mindestens eine Abgasleitung (7b) des mindestens einen schaltbaren Zylinders (2, 3) unter Verwendung des mindestens einen ersten Absperrelements (9) freigegeben wird, und
- anschließend die mindestens eine Ansaugleitung (5b) des mindestens einen lastabhängig schaltbaren Zylinders (2, 3) unter Verwendung des mindestens einen zweiten Absperrelements (11) freigegeben wird.
